# EUROPEAN PATENT SPECIFICATION

(11) **EP 0 785 710 B1**
(45) Date of publication and mention of the grant of the patent: **26.09.2001**
(21) Application number: 95934946.5
(22) Date of filing: 13.10.1995
(51) Int. Cl.: A01B 33/10, A01B 33/06

(54) **ROTARY CULTIVATOR TOOL**
KREISELKULTIVATORGERÄT
OUTIL ROTATIF POUR CULTIVATEUR

(30) Priority: 14.10.1994 SE 9403505
(43) Date of publication of application: 30.07.1997
(73) Proprietor: Elfgren, Per-Erik, 117 33 Stockholm (SE)
(72) Inventor: Elfgren, Anders, 820 70 Bergsjö (SE)
(74) Representative: Johansson, Lars E.
(86) International application number: SE9501182
(87) International publication number: WO9611563

(56) References cited:
- CH-A- 221 526
- US-A- 2 888 084
- US-A- 4 293 041

## Description

### Technical Field of the Invention

This invention relates to a ground cultivating tool with the shape of a body formed of one piece of sheet-metal, comprising on one hand a substantially flat, circular basic part with a central aperture for permitting the connection of the tool to a brush saw or similar in a way known per se, and on the other hand a cup-shaped part protruding from the periphery of the basic part, in which cup-shaped part a plurality of countersinks are formed which delimit a corresponding number of substantially equidistantly separated working teeth.

### Background of the Invention

For lighter ground working, such as weeding in strawberry beds and potato-fields, loosening of the soil in plots of vegetables, preparation in patches of forest land for planting purposes, etc, tools as separate accessory devices are used since a long time, which tools may be connected to brush saws or devices similar to brush saws. A brush saw may be carried and handled in a neat way and by the simple measure of replacing the ordinary circular saw blade on the saw by a separate cultivating tool, it may be quickly converted into a device which is particularly suitable for lighter ground cultivation. However, a disadvantage with previously known ground cultivating tools of this type is that they are relatively expensive to manufacture in that they necessitate welding or any other fastening of a number of tooth- or finger-like working means upon a carrying, central body. Since the tools in operation work with a comparatively high rotation speed in the soil, the wear is hard, wherefore the tools assume the character of articles of consumption, which, when their price is high, leads to considerable costs for the user. Another disadvantage is that the ground cultivating tools too easily tend to get stuck or suddenly be stopped, for instance against stones, thicker roots or other hard objects in the ground; something that not rarely may lead to the worm gear of the brush saw being damaged or completely demolished. Moreover, soil is thrown around in an uncontrolled way within rather wide circles around the tools.

A ground cultivating tool of the initially generally described type is disclosed in US 4 293 041. This known tool comprises comprises four working tines, of which each one separately has the shape of narrow, wedge-shapedly tapering sheet-metal parts that are distantly separated from each other along the periphery of the base part. This shape of the tines involves on one hand that they may get easily stuck in the ground, and on the other hand they run the risk of becoming deformed when hitting, e.g., coarser stones.

### Objects and Features of the Invention

The present invention aims at removing the above-mentioned disadvantages of the previously known ground cultivating tools. Therefore, a primary object of the invention is to create a tool which is extremely simple and, thereby, inexpensive, and which despite its constructional simplicity can work in an efficient way without any pronounced risk of getting stuck against hard objects in the ground. Another object is to provide a tool which works efficiently locally without throwing around the soil in an uncontrolled way. Still another object of the invention is to provide a tool that manages to fulfil also other tasks than merely just ground cultivation, viz. the edge-mowing of primarily lawns.

According to the invention, these objects are attained by the features that are defined in the characterizing clause of the claim.

### Brief Description of the Appended Drawing

In the drawing:
- Fig 1: is a perspective view of a brush saw, to which is connected a ground cultivating tool according to the invention,
- Fig 2: is an enlarged exploded view of the tool per se and cooperating details for connecting the tool to the brush saw,
- Fig 3: is a perspective view of the tool only, as seen in a state upside-down,
- Fig 4: is a planar projection of the same tool, and
- Fig 5: is a side view illustrating a plurality of tools piled into each other.

### Detailed Description of a Preferred Embodiment of the Invention

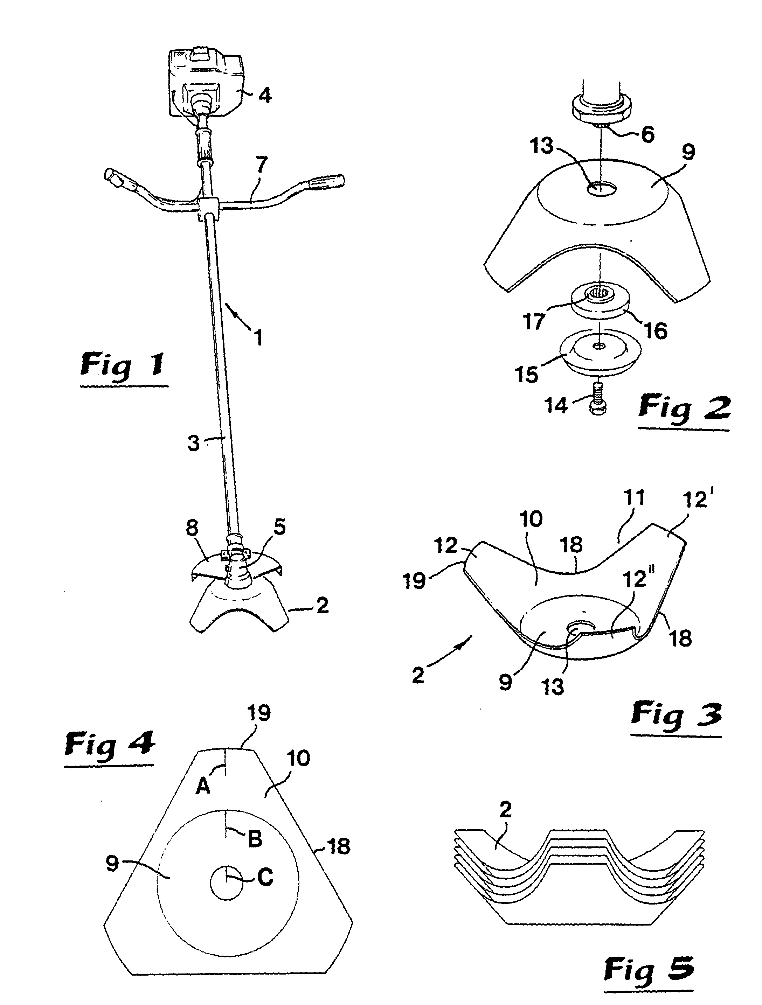

In fig 1 a brush saw is shown which is designated by reference numeral 1 in its entirety and to which is detachably connected a ground cultivating tool 2 according to the present invention. In a conventional manner, the brush saw comprises a tube 3 with an internal driving shaft that extends from a motor 4 to a worm gear accomodated in a housing 5, from which worm gear comes a driving shaft 6 (see fig 2) at an angle from the main driving shaft. On the tube is mounted an actuating grip 7 with an appurtenant speed control, and a protective shield 8 is mounted in connection with the gear housing 5. A non-shown carrying sling also belongs to the shown device.

The tool 2 consists of a body made of sheet-metal in one piece, which body comprises on one hand a substantially flat, circular basic part 9 and on the other hand a cup-shaped part 10 protruding from the periphery of the basic part, in which cup-shaped part are provided three countersinks 11 that delimit three substantially equidistantly separated working teeth 12, 12', 12". In the flat basic part 9 is recessed a central aperture 13 for permitting the connection of the tool to the output shaft 6 of the brush saw. In practice, this output shaft may be formed with splines. As shown in fig 2, the tool may be connected to the saw by a screw 14, a first washer 15 and a second washer or intermediate washer 16 with a central aperture having internal splines, there being a protruding, centering collar 17 in connection to the aperture, the outer diameter of the collar corresponding to the diameter of the aperture 13.

The individual countersink 11 that separates two adjacent working teeth, for instance teeth 12, 12', has a contour or delimiting edge 18 which is arched as observed towards the envelope surface of the cup part 10. When observed in the planar projection shown in fig 4, which is perpendicular to the plane of the basic part 9, then the same delimiting edge 18 is substantially rectilinear. In practice, the cup part 10 advantageously has a conical basic shape, although it is also feasible to use an at least weakly vaulted shape. Advantageously, the sheet-metal in the tool body may consist of a steel sheet with a thickness within the range of 1,5 to 3,0 mm. In practice, a steel sheet with a thickness of 2 mm has been used for the performed tests, which has given excellent results both from a production-technical and an operational point of view.

The very manufacturing of the shown tool can be realized in a particularly simple way in substantially one sole working operation. Thus, a simple circular blank of sheet-metal can be introduced into a pressing tool and in a first step be given a conical cup-like shape and then immediately thereafter in a second step be punched, thereby obtaining the central aperture 13 and the three countersinks or cutting-outs 11. The punching of specifically the countersinks 11 is to a large extent facilitated by the fact that the delimiting edges 18 are rectilinear when observed in a planar projection, as shown in fig 4.

Referring to fig 4, it should be mentioned that, in practice, the radius A when observed in a planar projection from the centre of the tool towards the outer, cutting edge-forming edge 19 on each individual working tooth, may lie within the range of 40 to 100 mm and most suitably amount to about 80 mm. In this connection, the radius B of the basic part 9 may lie within the range of 25 to 50 mm and suitably amount to about 43 mm. For all embodiments, the radius C of the connecting aperture 13 may amount to 10 mm. The shortest radial distance between the individual delimiting edge 18 and the centre of the tool may be within the range of 35 to 60 mm and suitably amount to about 52 mm. In practice, the perpendicular distance or depth between a plane that is common for the outermost point edges 19 of the teeth and the plane of the bottom part 9 may be within the range of 30 to 40 mm. The cutting edge-forming, free point edge 19 of each tooth may have a tangential extension of 25 to 40, suitably about 35 mm.

The advantages of the invention are evident. Starting off from a very inexpensive initial blank, the ground cultivating tool according to the invention may be mass-produced at high pace in working operations during which the blank essentially simultaneously is press-formed and punched, while obtaining the shape as shown in the drawings. By the fact that the tool is shaped with specifically three equidistant working teeth, the effect is attained during practical running that the teeth can efficiently cultivate the soil without any considerable risk of getting stuck against hard objects in the ground. If the number of teeth were only two, the risk of coming to a standstill would be considerably larger. On the other hand, if the number of teeth were four or more, the radial extension of the teeth would be reduced to such a high degree, that the soil cultivating effect becomes mediocre. A particular advantage of the tool according to the invention may be seen in fig 5 which illustrates how the tools 2 may be piled into each other while requiring a minimum of storage space. This capability of being piled is possible thanks to the cup-shape of the tools, which shape permits that they are introduced into each other without any important interspaces between the inside of a first tool and the outside of the next tool. Furthermore, by the conical basic shape of the cup part 10, it is possible to make use of the tool according to the invention for edge-mowing purposes. Hence, if the tool is inclined at an angle where a generatrix along the envelope surface of the cup part 10 is located substantially vertically, the delimiting edges 18 of the countersinks 11 may be brought to work as cutting edges, for instance in a lawn.

## Claims

1. A ground cultivating tool having the shape of a body formed of one piece of sheet-metal, comprising on one hand a substantially flat, circular basic part (9) with a central aperture (13) for permitting the connection of the tool to a brush saw or similar in a way known per se, and on the other hand a cup-shaped part (10) protruding from the periphery of the basic part (9), in which cup-shaped part a plurality of countersinks (11) are formed which delimit a corresponding number of substantially equidistantly separated working teeth (12, 12', 12"), **characterized in that** the number of working teeth (12, 12', 12") is three, and that the contour or delimiting edge (18) of the individual countersink (11) is on one hand arched as observed towards the envelope surface of the cup part (10), and on the other hand substantially rectilinear as observed in a planar projection perpendicularly to the plane of the basic part (9) .

## Patentansprüche

1. Bodenkultivierungswerkzeug in Gestalt eines Körpers, der aus einem Metallblechteil gebildet ist, aufweisend einerseits einen im wesentlichen flachen kreisförmigen Basisteil (9) mit einem zentralen Durchbruch (13) zur Verbindung des Werkzeugs mit einer Bürstensäge oder dergleichen in an sich bekannter Weise, und andererseits einen becherförmigen Teil (10), der vom Umfang des Basisteils (9) vorsteht, wobei im becherförmigen Teil mehrere Ausfräsungen (11) gebildet sind, die eine entsprechende Anzahl von im wesentlichen gleichermaßen beabstandet getrennte Arbeitszähnen (12, 12', 12") begrenzen, **dadurch gekennzeichnet, dass** die Anzahl an Arbeitszähnen (12, 12', 12") drei beträgt, und dass der Umriss oder der Begrenzungsrand (18) einer einzelnen Ausfräsung (11) einerseits bei einer Betrachtung in Richtung auf die Umhüllungsfläche des Becherteils (10) bogenförmig verläuft, und andererseits in einer planaren Projektion senkrecht zur Ebene des Basisteils (9) im wesentlichen geradlinig verläuft.

## Revendications

1. Appareil de culture du sol ayant la forme d'un corps formé dans une pièce de tôle, comportant d'une part une partie de base circulaire sensiblement plate (9) avec une ouverture centrale (13) destinée à permettre le raccordement de l'outil à un débroussailleuse ou équivalent d'une matière connue en elle-même, et d'autre part une partie en forme de coupe (10) qui dépasse de la périphérie de la partie de base (9), et dans cette partie en forme de coupe, plusieurs découpes (11) sont formées qui délimitent un nombre correspondant de dents de travail séparées de manière sensiblement équidistante (12, 12', 12''),
**caractérisé en ce que** le nombre de dents de travail (12, 12', 12'') est de trois, et en ce que le contour ou le bord de délimitation (18) de la découpe individuelle (11) est d'une part courbe comme cela est observé vers la surface d'enveloppe de la partie en forme de coupe (10), et d'autre part sensiblement rectiligne comme cela est observé dans une projection plane perpendiculairement au plan de la partie de base (9).
